# EUROPEAN PATENT APPLICATION

(11) **EP 2 533 079 A2**
(43) Date of publication of application: **12.12.2012**
(21) Application number: 12170708.7
(22) Date of filing: 04.06.2012
(51) Int. Cl.: G02B 5/30, G02F 1/1335, G02B 6/00

(54) **Optical polarising film for a liquid crystal display device using v-shaped prisms**

(30) Priority: 09.06.2011 TW 100120105
(71) Applicant: Innocom Technology (Shenzhen) Co., Ltd., Shenzhen City 518109 (CN); Chimei Innolux Corporation, Miao-Li County (TW)
(72) Inventor: Wang, Tzu-Chang, 350 Miao-Li County (TW); Mao, Li-Wei, 350 Miao-Li County (TW); Chang, Hsin-Wen, 350 Chu-Nan (TW)
(74) Representative: 2K Patentanwälte Blasberg Kewitz & Reichel

(57) **Abstract**

An optical film is provided. The optical film includes a substrate, a reflective polarizer, and a first transmission medium. The reflective polarizer is disposed at the front surface of the substrate. The first transmission medium is disposed at the rear surface of the substrate and comprises a plurality of V-shaped prisms. The substrate, the reflective polarizer, and the first transmission medium are bounded to each other to form a unitary sheet.

## Description

### CROSS REFERENCE TO RELATED APPLICATIONS

This Application claims priority of Taiwan Patent Application No.100120105, filed on June 09, 2011, the entirety of which is incorporated by reference herein.

### BACKGROUND OF THE INVENTION

### Field of the Invention

The present invention relates to a liquid crystal display device, and in particular relates to a liquid crystal display device with a unitary optical film.

### Description of the Related Art

Liquid crystal display devices are already widely used in all kinds of electronic devices, such as LCD TVs and computers. Key advantages are low electricity consumption, low driving voltage, and the possibility of achieving lighter weight and thinner volume. However, the liquid crystal display panel in the liquid crystal display device cannot emit light by itself, and has to pair with a back light unit to light the screen evenly.

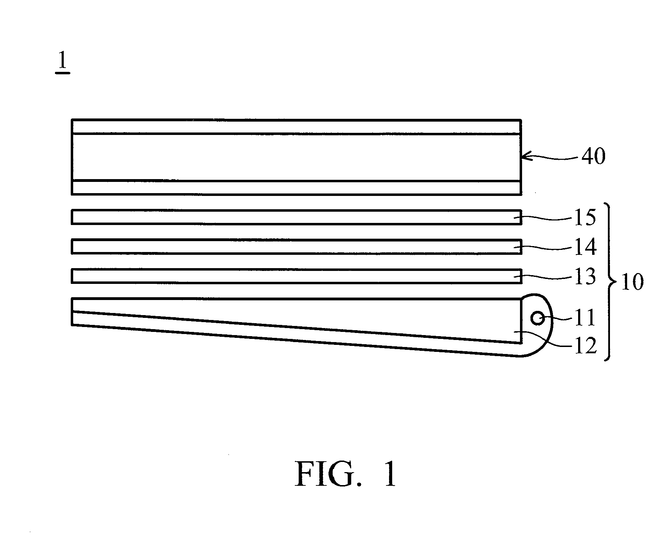

Please refer to Fig. 1. Fig. 1 shows a side view of the conventional liquid crystal display device 1 utilizing an edge-light type back light unit. The liquid crystal panel module 40 is disposed in front of the back light unit 10, wherein the back light unit comprises: a light-emitting unit 11, a light guide panel 12, a lower diffusion plate 13, a prism sheet 14, and an upper diffusion plate 15.

The light guide panel 12 guides the light beam emitted from the light-emitting unit 11 to the lower diffusion plate 13. The lower diffusion plate 13 then disperses and hazes the light beam coming from the light guide panel 12 and distributes the brightness evenly. Nevertheless, the brightness within the effective viewing angle is reduced drastically due to the lower diffusion plate 13.

In order to solve this problem, the prism sheet 14 receives the light beam that passes through the lower diffusion plate 13 and converges the emergent angle of the incident light beam to strengthen brightness within the effective viewing angle. The prism sheet 14 is a commonly sold brightness enhancement film, with a 90° apex angle, and prism sheet 14 curving towards the liquid crystal panel module 40.

Finally, the light beam is dispersed and hazed again through the upper diffusion plate 15 in order to provide a uniform light beam to the liquid crystal panel module 40 situated in front.

However, the above-mentioned back light unit needs at least three individually manufactured optical films, each requiring its own substrate material, which yield a high production cost.

Furthermore, the air layer formed between the upper diffusion plate and the prism sheet will cause a portion of the light beam to fully reflect from the prism sheet and render it unable to be projected into the upper diffusion plate. The strength of the light beam will be consumed with the increased length thus weakening the overall brightness. Conventionally, in order to increase the brightness of the back light unit it is necessary to raise the light source power of the light-emitting element, but this also means accelerated energy consumption.

In this regard, a liquid crystal display device with a unitary optical film came into high demand.

### BRIEF SUMMARY OF THE INVENTION

In order to overcome the problems of the prior art multilayer optical film, this invention provides a liquid crystal display device with reduced number of optical films.

As one of the objectives, this invention provides an optical film, which includes a substrate, a reflective polarizer, and a first transmission medium. The reflective polarizer is disposed at the front surface of the substrate. The first transmission medium is disposed at the rear surface of the substrate and comprises a plurality of V-shaped prisms. The substrate, the reflective polarizer, and the first transmission medium are bounded to each other to form a unitary sheet.

Another objective of this invention is to provide a liquid crystal display device, which includes a liquid crystal panel module, a light guide panel, a light emitting element, and the above mentioned optical film. The light guide panel includes a light emitting surface adjacent to the rear surface of the liquid crystal panel module, and a light incident surface with an adjacent corresponding light emitting surface. The light emitting element faces the light incident surface of the light guide panel. The optical film is disposed on the light emitting surface of the light guide panel or the rear surface of the liquid crystal panel module.

Yet another objective of this invention is to provide a manufacturing method for the above mentioned optical film, which includes: providing a substrate attached with a reflective polarizer and coating a light curing resin on a surface of the substrate opposite to a surface that is connected to the reflective polarizer; providing patterned rollers to press the light curing resin; and providing a light beam to cure the light curing resin.

The optical film of the invention is a unitary sheet, and not only reduces cost, but also improves the deficiencies found in the multilayer optical film of the prior art.

### BRIEF DESCRIPTION OF THE DIAGRAMS

The present invention can be more fully understood by reading the subsequent detailed description and examples with references made to the accompanying diagrams, wherein:

Fig. 1 shows a cross-section diagram of a conventional liquid crystal display device;

Fig. 2A shows an explosive diagram of the liquid crystal display device of the first embodiment of the invention;

Fig. 2B shows an explosive diagram of the back light unit of the first embodiment of the invention;

Figs. 3A-3E show cross-section diagrams of the optical films of the invention;

Fig. 4 is a schematic view of the manufacturing method of the optical film of the invention; and

Fig. 5 shows an explosive diagram of the liquid crystal display device of the second embodiment of the invention.

### DETAILED DESCRIPTION OF THE INVENTION

The following description is one of the embodiments of the invention. This description is made for the purpose of illustrating the general principles of the invention and should not be taken in a limiting sense. The scope of the invention is best determined by reference to the appended claims.

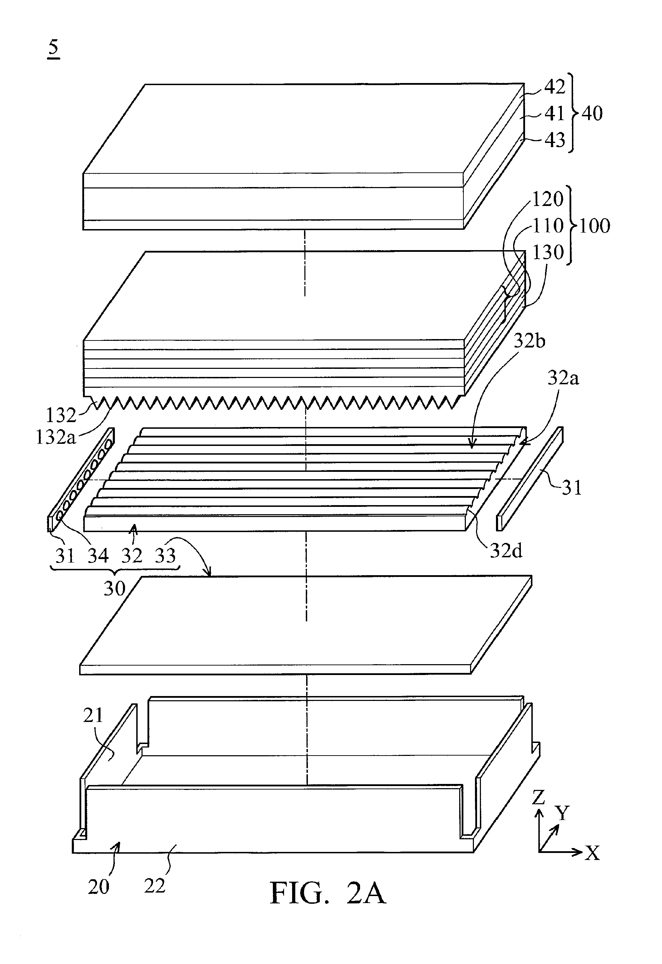

Please refer to Fig. 2A. Fig. 2A shows an explosive diagram of the liquid crystal display device of the first embodiment of the invention. The liquid crystal display device 5 of this embodiment includes a frame 20, a back light unit 30, a liquid crystal panel module 40, and an optical film 100. It should be noted that the "front surface" in this specification refers to the upper portion of the drawing, namely, the one side of the liquid crystal display device 5 which manifest an image, while the "rear surface" refers to the lower portion of the diagram.

In one exemplary embodiment, the frame 20 is a rectangular shell, with a height to width ratio of 16:9, wherein the short side 21 is defined on the Y-axis and the long side 22 is defined on the X-axis. Normally, when the liquid crystal display device 5 of the invention is placed upright, the short side 21 is located on the left and right sides of the user, and the long side 22 is located on the top and bottom side, wherein the long side 22 is parallel to a horizontal plane.

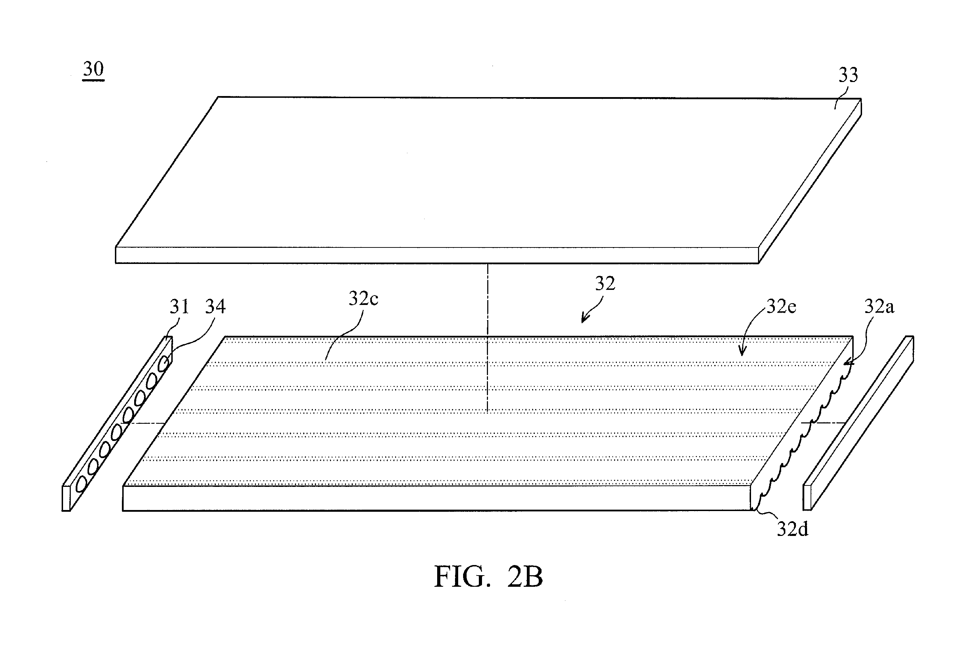

Please refer to Figs. 2A and 2B. Fig. 2B shows an explosive diagram of the back light unit 30 of the first embodiment of the invention. The back light unit 30 is disposed inside of the frame 20, and includes two light bars 31, a light guide plate 32, a reflective sheet 33, and a plurality of light emitting element 34. The light bars 31 are disposed in the inner surfaces of the two short sides 21 of the frame 20. The light emitting element 34 is disposed on the light bars 31 emitting a light beam towards a predetermined direction (X-axis), wherein the predetermined direction (X-axis) is parallel to the long side 22 of the frame 20. The reflective sheet 33 is disposed in the inner bottom surface of the frame 20. In one exemplary embodiment, the light bar 31 is a circuit board, the light emitting element 34 is a light emitting diode, and the reflective sheet 33 is made of, but not limited to, aluminum.

The light guide plate 32 is disposed on the front surface of the reflective sheet 33 and includes two light incident surfaces 32a, a light emitting surface 32b, a bottom surface 32e, and printed dots 32c. The light incident surfaces 32a respectively face the light emitting elements 34 to receive the light beam from the light emitting element 34. The light emitting surface 32b is adjacent to the two light incident surfaces 32a, and includes a patterned surface 32d. The bottom surface 32e is opposite to the light emitting surface 32b and is adjacent to the reflective sheet 33. The printed dots 32c is randomly spread on the bottom surface 32e.

In this embodiment, two light bars 31 are disposed on the inner surface of the short sides 21 of the frame 20 to allow both sides of the light guide plate 32 to receive a light beam incident from the light emitting element 34 located on top of the light bars 31. Those skilled in the art can achieve the same effect by using a higher brightness light emitting element 34 and disposing a single light bar 31 to receive light from one side of the light guide plate 32.

In one embodiment, the patterned surface 32d is parallel to a section of the light incident surface 32a and comprises a plurality of lenticular protrusions. In further detail, the patterned surface 32d is comprised of a plurality of minute curved surfaces along the Y-axis, wherein the curved surfaces are lined adjacent to each other, and the apex extends parallel to the predetermined direction (X-axis), towards which the light emitting elements 34 emit a light beam.

The printed dots 32c is used to limit the emerging angle of the light beam emitted from the light emitting surface, so that a light concentration result is achieved. Further, the printed dots 32c can change the path in which the light beam travels in the light guide plate 32 altering the total reflection phenomenon of the light beam in order to guide the light beam to the light emitting surface 32b. The emerging light shape of the light guide plate 32 depends on the type of the printed dots 32c. In one exemplary embodiment, the printed dots 32c can be the traditionally used white ink or transparent ink, wherein the latter is a better option for the printed dots 32c as it concentrates the lights more. If a transparent ink is used for the printed dots 32c, the structural feature of the light guide plate 32 is accordingly changed. For example, in one exemplary embodiment, the patterned surface 32d of the light guide plate 32 faces the reflective sheet 33, and the printed dots 32c are dispersed on the light emitting surface 32b of the light guide 32.

The liquid crystal panel module 40 is disposed adjacent to the light emitting surface 32 on the light guide plate 30. The liquid crystal panel module 40 includes a liquid crystal element 41, an upper polarization plate 42, and a lower polarization plate 43. The upper polarization plate 42 is disposed on the front surface of the liquid crystal element 41, while the lower polarization plate 43 is disposed on the rear surface of the liquid crystal element 41. Since the liquid crystal panel module 40 is well within the knowledge of one skilled in the art, further elaboration will not presented here regarding the liquid crystal panel module 40.

The optical film 100 is connected to the lower polarization plate 43, and through the lower polarization plate 43 the optical film 100 is connected to the liquid crystal element 41. The optical film 100 includes a substrate 110, a reflective polarizer 120 and a first transmission medium 130, wherein the reflective polarizer 120 is disposed in the front surface of the substrate 110, and the first transmission medium 130 is disposed in the rear surface of the substrate 110. In other words, through the reflective polarizer 120 the optical film 100 is connected to the lower polarization plate 43 and is connected to the liquid crystal element 41 via the lower polarization plate 43.

In one exemplary embodiment, the substrate 110 is a light transmissive membrane made of polyethylene terephthalate (PET). In the reflective polarizer 120, two or more than two transparent layers are alternatively stacked, wherein each of the transparent layers has a different index of refraction. The first transmission medium 130 is made of a light curing resin. The structural features of the reflective polarizer 120 and the first transmission medium 130 will be elaborated in the following description.

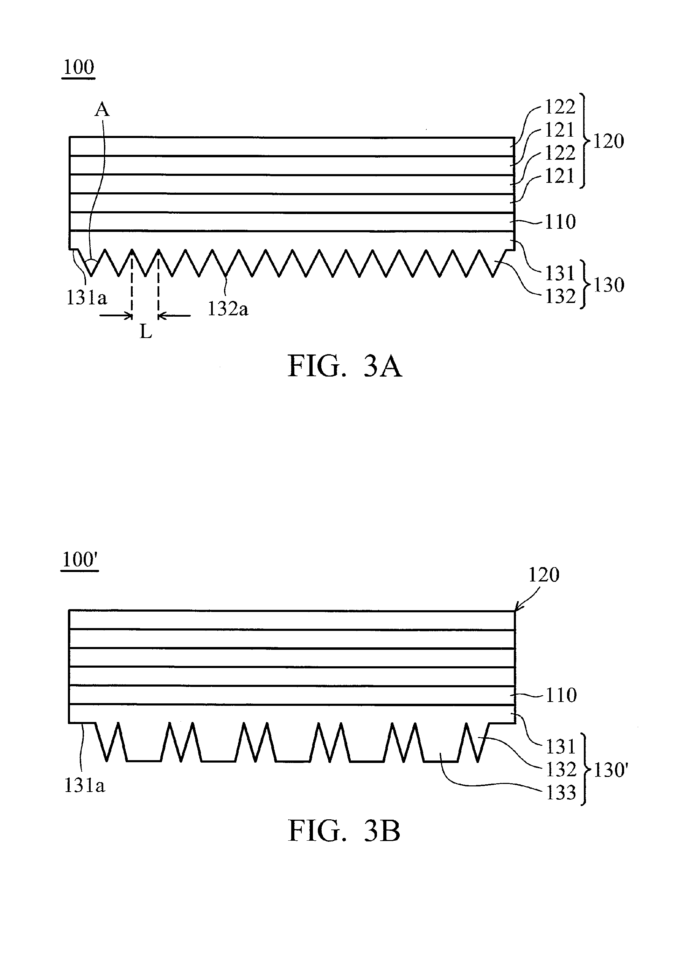

Please refer to Fig. 3A. Fig. 3A shows a cross-section diagram of the optical film 100. The reflective polarizer 120 is an alternatively stacked structural layer in which transparent layers 121 and transparent layers 122 are stacked. The transparent layers 121 and transparent layers 122, having different index of infractions, are made of different polymeric materials extruded together. Alternately, the transparent layers 121 and 122 are made of the same material but processed by different methods. Alternately, the transparent layers 121 and 122 are alternatively stacked structural layers made of cholesteric liquid crystal, made up of liquid crystal molecules arranged in a regular helical structure at a certain pitch, wherein the transparent layers 121 and 122 have different orientations (n1/n2/n1...).

Thanks to the structural feature of the reflective polarizer 120, light with a particular polarization direction is allowed to pass through the reflective polarizer, and the remaining light is reflected back into the light guide plate 32 or the reflective sheet 33 and reenters the reflective polarizer 120 to fulfill the object of enhancing brightness. On the other hand, since a part of the transparent layers 121 and 122 is not connected to other elements, the exposed surfaces thereof are vulnerable. In this concern, a removable pre-mask (not shown, can be made of polymer) can be attached thereon so as to temporarily protect the exposed surfaces and strengthen the mechanical structure of the reflective polarizer 120.

The first transmission medium 130 of the optical film 100a includes a base layer 131 and a plurality of V-shaped prisms (turning film) 132. The base layer 131 is connected to the substrate 110, and a plurality of V-shaped prisms 132 is disposed successively on the base layer 131 away from the surface 131 a that connects to the substrate 110. Every V-shaped prisms 132 has an apex that extends towards the Y-axis (Fig 2A), and a triangular profile on the X-Z plane. The first transmission medium 130 has an index of refraction smaller than that of the index of refraction of the substrate 110. When a light beam which incidents therein has a wide angle, the light beam is totally reflected from an interface of the substrate 110 and the first transmission medium 130, so that the light can be retracted.

In one embodiment, the apex angle A of the V-shaped prisms 132 is approximately 60°∼80°, wherein the width L is approximately 10um∼100um. A designer can adjust the dimensions to enhance the light concentration effect in accordance with demands.

It is noted that the above mentioned first transmission medium 130 is a brightness enhancement film which is different from conventional one. The difference is in the apex angle of the V-shaped prisms 132, which is contrary to the conventional brightness enhancement film, which does not form a right angle. Furthermore, the apex of the V-shaped prisms 132 is curved towards the back light unit 30 (Fig. 2) in use, while the apex of the conventional brightness enhancement film is reversed to the back light unit.

Through the above mentioned optical film 100, after the light beams are emitted from the light emitting surface 32b of the light guide plate 32, they are first refracted and then converge in the V-shaped prisms 132 of the first transmission medium 130 to increase the brightness of the visible region. Then, they are passed successively through the base layer 131 and the substrate 110 and selected by the reflective polarizer 120, so as to increase brightness. Therefore, the optical film 100 formed by a unitary sheet can replace the conventional multilayer optical film distributing the light beam evenly to the liquid crystal display device (Fig. 2).

The structural feature of the optical film 100 of this invention is not limited to the above embodiment. In the description below, some exemplary possible implementation methods of the optical film 100 will be illustrated.

Please refer to Fig. 3B. Fig. 3B shows a cross-section diagram of another optical film 100'. Unlike the optical film 100, the surface 131a of the first transmission medium 130' further includes a plurality of plane-convex prisms 133 disposed between the V-shaped prisms 132 adjacently and separately. The apex of the plane-convex prism 133 is a plane to protect the apex structure of the V-shaped prisms 132 from damage. Nonetheless, the location and amount of the plane-convex prism 133 should not be limited.

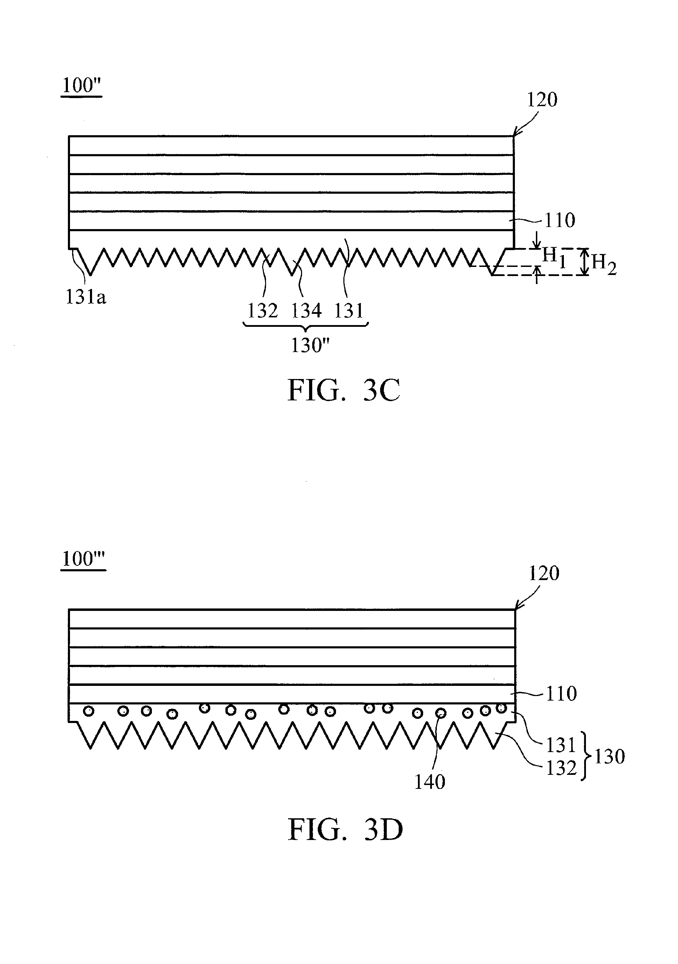

Please refer to Fig. 3C. Fig 3C is a cross-section diagram of another optical film 100". It differs with the optical film 100 in that the surface 131 a of the first transmission medium 130" further includes a plurality of V-shaped prisms 134 with a greater height. The apex height H2 of the V-shaped prisms 134 is greater than the apex height H1 of the V-shaped prisms 132 in order to maintain the distance between the V-shaped prisms 132 and the light guide plate 120 (Fig. 2). This is to avoid the apex of the V-shaped prisms 132 from producing static electricity with the light guide plate 32, and being mutually attracted, which results in the uneven brightness (mura phenomenon).

In one exemplary embodiment, the height difference of H2 to H1 is 2% to 10% of H1, but it is not limited thereto. Those skilled in the art can choose a more suitable height difference based on the numbers of the invention provided to achieve their goal.

Please refer to Fig. 3D. Compared to the optical film 100, the optical film 100"' further includes a plurality of diffusion particles 140 dispersed irregularly in the first transmission medium 130. The diffusion particles 150 allow the light beam to be dispersed and therefore improve the brightness uniformity of the optical film 100"'.

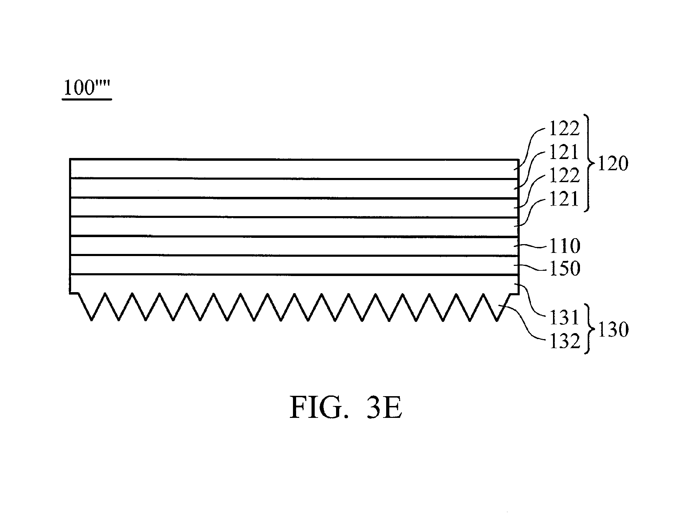

Please refer to Fig. 3E. In this embodiment the optical film 100"' also includes a second transmission medium 150 disposed between the reflective polarizer 120 and the first transmission medium 130. More specifically, the third transmission medium 140 is disposed between the substrate 110a and the first transmission medium 130. The second transmission medium 150 is comprised of a low refraction index material such as silica resin, or another resin with a low refraction index. Nevertheless, it should be noted that the low refractive index property referred to herein is in relation to the refractive index of the transmission medium 130; therefore, a light beam with an overtly wide emerging angle will be fully reflected between the first transmission medium 130 and the second transmission medium 150. A light beam with an overtly wide viewing angle can then be refracted back for reuse, and thus reduce unnecessary energy consumption. The second transmission medium 150 is comprised of a low refraction index material such as silica resin, or another resin with a low refraction index. Nevertheless, it should be noted that the low refractive index property referred to herein is in relation to the refractive index of the transmission medium 130; therefore, a light beam with an overtly wide emerging angle will be fully reflected between the first transmission medium 130 and the second transmission medium 150. A light beam with an overtly wide viewing angle can then be refracted back for reuse, and thus reduce unnecessary energy consumption.

For illustration purpose, the reflective polarizer 120, in the drawings, only has four transparent layers 121 and 122. It is appreciated for a person skilled in the art to add one or more than one transparent layers, made of different materials and having distinct index of refractions, to the reflective polarizer 120 or to increase a number of the transparent layers 121 and 122 to tens, hundreds or thousands of transparent layers 121 and 122.

It should be especially noted that the optical film 100 of the invention is a unitary sheet, which means that the substrate 110, the reflective polarizer 120 and the first transmission medium 130 are bounded to each other to form a unitary sheet. Generally, the front surface of the optical film 100 is a smooth plane, and the rear surface of the optical surface 100 is a rough surface including embossed microstructures. To emphasize this feature, the manufacturing method of the optical film 100 will be described in the below description.

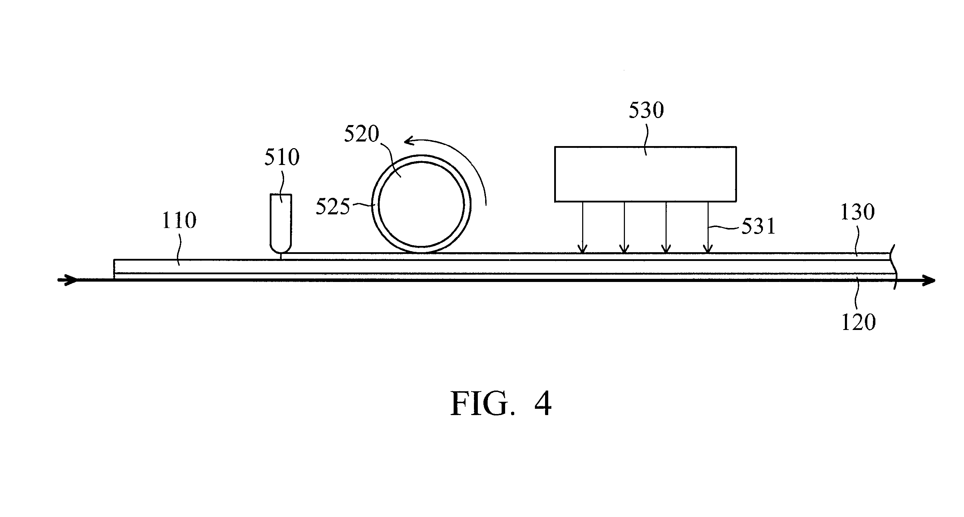

Please refer to Fig. 4. Fig. 4 is a schematic diagram of the manufacturing process of the optical film 100. Firstly, a substrate 110 is provided which has a reflective polarizer 120 attached thereon, and then a spray nozzle light curing resin is coated on a surface of the substrate 110 which does not have the attached reflective polarizer 120. A first patterned roller 520 is then pressed onto the light curing resin to print a particular pattern on the surface of the light curing resin. Finally, the light curing resin is cured through the ultraviolet (UV) ray 531 emitted from the machine 530, so that the substrate 110, the reflective polarizer 120 and the first transmission medium 130 are bounded into a unitary sheet. The light beam emitted from the machine 520 can be infrared (IR) or other types of rays depending on the kind of light curing resin selected.

The surface of the above mentioned first patterned roller 520 is covered with molds 525 produced through physical etching, chemical etching or other forms of engraving. The mold 525 includes a plurality of grooves (not shown) corresponding to the surface 131a of the first transmission medium 130.

The transparent layers 121 and 122 of the reflective polarizer 120 are bounded onto the substrate 110 via the following process. Firstly, an adhesive, such as a resin, is sprayed on a surface of the substrate 110, and the reflective polarizer 120 is blanked on the surface of the substrate. Next, two corresponding rollers (not shown) are used to press the substrate 110 and the reflective polarizer 120 to ensure the reflective polarizer 120 is completely bounded onto the substrate 110. On the other hand, a removable pre-mask can be attached on the surface of the reflective polarizer 120 which is not bounded to the substrate 110 to temporarily protect it from damage. The pre-mask will not be removed until the reflective polarizer 120 is attached to other elements.

Please refer to Figs. 2 and 3A. When the optical film 100 is attached to the liquid crystal panel module 40, the removable pre-mask is removed, and the optical film 100 is connected to the lower polarization plate 43 of the liquid crystal panel module 40 via the transparent layer 121 or transparent layer 122. Thus, the upper polarization plate 42 is disposed on the front side of the liquid crystal panel module 40, and the lower polarization plate 43 and the optical film 100 connected to the lower polarization plate 43 are disposed on the rear side of the liquid crystal panel module 40. Generally, the rear side of the liquid crystal panel module 40 is a rough surface with V-shaped prisms, and the front side of the liquid crystal panel module 40 is a smooth plane.

In overview of the liquid crystal display device 5 of the invention, in order to provide a light beam with high brightness uniformity for the liquid crystal panel module 40, the path of the light beam emitted by the light emitting element 34 is along a predetermined direction (X-axis) parallel to the long side 22 of the frame 20, and the lenticular protrusions on the patterned surface 32d of the light guide 32 are also extended along the predetermined direction (X-axis) towards which the light emitting element 34 emits the light beam. Furthermore, the apexes 132a of the V-shaped prisms 132 on the optical film 100 extend perpendicularly to the predetermined direction (X-axis) towards which the light emitting element 34 emits the light beam.

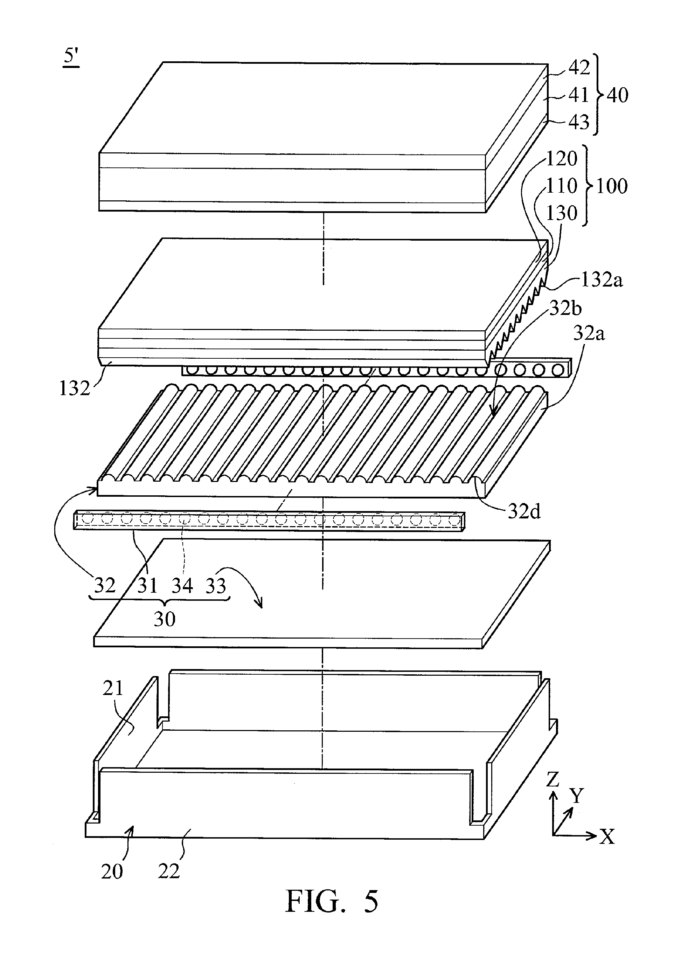

Please refer to Fig. 5. Fig. 5 shows a liquid crystal display device 5' of the second embodiment of this invention. The liquid crystal display device 5'differs from the liquid crystal display device 5 by disposing the light bar 31 and light emitting element 34 of the back light unit 30 in the inner surface of the long side 22 of the frame 20. In order to obtain brightness uniformity similar to the liquid crystal display device 5, the path of the light beam emitted by the light emitting element 34 is along a predetermined direction (Y-axis) parallel to the short side 21 of the frame 20, and the lenticular protrusions on the patterned surface 32d extend parallel to the predetermined direction (Y-axis) towards which the light emitting element 34 emits the light beam. Furthermore, the apexes 132a of the V-shaped prisms 132 of the optical film 100 extend perpendicularly to the predetermined direction (Y-axis) towards which the light emitting element 34 emits the light beam.

The optical film of the invention improves the shortcomings of the multilayer optical film in the prior art by reducing the number of optical films without sacrificing brightness uniformity.

While the invention has been described by way of example and in terms of embodiments, it is to be understood that the invention is not limited to the disclosed embodiments. To the contrary, it is intended to cover various modifications and similar arrangements (as would be apparent to those skilled in the art). Therefore, the scope of the appended claims should be accorded the broadest interpretation so as to encompass all such modifications and similar arrangements.

## Claims

1. An optical film (100), comprising:
a substrate (110);
a reflective polarizer (120), disposed at the front surface of the substrate; and
a first transmission medium (130), disposed at the rear surface of the substrate
and comprising a plurality of V-shaped prisms (132),
wherein the substrate, the reflective polarizer, and the first transmission
medium are bounded to each other to form a unitary sheet.

2. The optical film as claimed in claim 1, wherein the top of the V-shaped prisms (132) differ in height.

3. The optical film as claimed in claim 1 or 2, wherein the first transmission medium (130) further comprises a plurality of plane-convex prisms (133) adjacent to the V-shaped prisms, wherein the surface of the plane-convex prisms is a flat surface.

4. The optical film as claimed in claim 1, further comprising a plurality of diffusion particles disposed inside of the first transmission medium.

5. The optical film as claimed in any of the preceding claims, wherein the reflective polarizer (120) comprises at least a first transparent layer (121) and a second transparent layer (122) having an index of refraction different from an index of refraction of the first transparent layer, wherein the first transparent layer and the second transparent layer are alternatively stacked.

6. The optical film as claimed in claim 5, further comprising a second transmission medium (150) disposed between the first transmission medium (130) and the reflective polarizer (120), wherein the second transmission medium has an index of refraction smaller than that of the index of refraction of the first transparent layer.

7. A liquid crystal display device, comprising:
a liquid crystal panel module (40);
a light guide (32), adjacent to the rear surface of the liquid crystal panel module, having a light incident surface and a light emitting surface adjacent to the light incident surface;
a light emitting element (34), facing the light incident surface of the light guide plate; and
an optical film (100) as claimed in any of the preceding claims, said optical film (100) being disposed at the light emitting surface of the light guide, or the rear surface of the liquid crystal panel module.

8. The liquid crystal display device as claimed in claim 7, wherein the liquid crystal panel module comprises an upper polarization plate (42), a lower polarization plate (43), and a liquid crystal unit (41), wherein the liquid crystal unit is disposed between the upper polarization plate (42) and the lower polarization plate (43), and the lower polarization plate faces the light guide plate (32), and the optical film (100) is disposed at the lower polarization plate (43).

9. The liquid crystal display device as claimed in claim 7 or 8, wherein the top of the V-shaped prisms (132) face the light emitting surface of the light guide plate (32).

10. The liquid crystal display device as claimed in any of claims 7 to 9, wherein the light emitting surface comprises a patterned surface (32d) formed by a plurality of lenticular projections and the light emitting element emits a light into a predetermined direction, wherein the lenticular bump extend parallel to the predetermined direction.

11. The liquid crystal display device as claimed in claim 10, wherein the V-shaped prisms (132) extend perpendicular to the predetermined direction.

12. The liquid crystal display device as claimed in any of claims 7 to 10, further comprises a frame (20) with two long sides (22) and two short sides adjacent to the two long sides, wherein the light emitting element is disposed at one of the short sides or both sides, and the predetermined direction is parallel to the long side (22).

13. The liquid crystal display device as claimed in claim 12, wherein the long sides (22) are parallel to a horizontal plane.

14. A manufacturing method of the optical film (100) as claimed in any of claims 1 to 6, comprising:
providing a substrate attached with a reflective polarizer;
coating a light curing resin on a surface of the substrate opposite to a surface that is connected to the reflective polarizer;
providing a patterned roller to press the light curing resin; and
providing a light beam to cure the light curing resin.

15. The manufacturing method of the optical film as claimed in claim 14, wherein the light beam is an ultraviolet ray.
